Europäisches Patentamt

European Patent Office

Office européen des brevets

(19)

(11) Veröffentlichungsnummer: **0 202 355 B1**

# (12) EUROPÄISCHE PATENTSCHRIFT

(45) Veröffentlichungstag der Patentschrift:
13.07.88

(21) Anmeldenummer: 85106420.4

(22) Anmeldetag: 24.05.85

(51) Int. Cl.⁴: **B 60 S 9/06**

(54) Teleskop-Stützwinde.

(43) Veröffentlichungstag der Anmeldung:
26.11.86 Patentblatt 86/48

(45) Bekanntmachung des Hinweises auf die Patenterteilung:
13.07.88 Patentblatt 88/28

(84) Benannte Vertragsstaaten:
BE DE FR GB IT NL

(56) Entgegenhaltungen:
FR - A - 1 125 194
FR - A - 2 388 178
GB - A - 2 000 479
US - A - 1 491 633
US - A - 2 543 100
US - A - 2 708 374

(73) Patentinhaber: Jost-Werke GmbH, Siemensstrasse 2,
D-6078 Neu Isenburg (DE)

(72) Erfinder: Dreyer, Hans, Wolfgang-Borchert-Strasse 13,
D-6073 Egelsbach-Bayerseich (DE)
Erfinder: Müller, Gerald, Wilhelm-Leuschner-Strasse 58,
D-6054 Rodgau 5 (DE)

(74) Vertreter: Köhler, Günter, Dipl.-Ing., Nordring 1,
D-6458 Rodenbach (DE)

ACTORUM AG

## Beschreibung

Die Erfindung bezieht sich auf eine Teleskop-Stützwinde mit einem mittels Spindeltrieb aus einem Führungsrohr ausfahrbaren Stützbein, wobei der Spindeltrieb eine am Stützbein befestigte Mutter und eine im Führungsrohr drehbar gelagerte, antreibbare Spindel aufweist, die in die Mutter eingreift, und mit einem Schmiermittelanschluss am Führungsrohr, über den Schmiermittel zur Schmierung des Spindeltriebs zuführbar ist.

Derartige Stützwinden werden vornehmlich für Sattelanhänger, aber auch für Container verwendet.

Bei einer bekannten Teleskop-Stützwinde der gattungsgemässen Art (Prospekt «Jost Teleskop-Stützvorrichtung, Baureihe V200G und V240G, September 1984») wird die Spindel vom Hersteller mit Fett geschmiert. Da sich das Schmiermittel verbraucht bzw. durch eingedrungene Feuchtigkeit in seiner Wirkung beeinträchtigt wird, ist eine Nachschmierung erforderlich. Zu diesem Zweck ist im Führungsrohr unterhalb einer quer im Führungsrohr befestigten Platte, in der die Spindel drehbar gelagert und axial abgestützt ist, ein Schmiernippel vorgesehen, über den nachträglich Fett in den Hohlraum des Führungsrohres oberhalb der Mutter des Spindeltriebs geföder werden kann. Von dort fällt das Fett in einen nach oben und zur Spindel hin offenen Ringraum der Mutter, so dass die Spindel bei ihrer Betätigung geschmiert wird. Wie sich gezeigt hat, ist diese Art der Schmierung unvollkommen. Wenn das Schmiermittel keine ausreichende Fliessfähigkeit hat, was insbesondere bei niedriger Temperatur der Fall ist, klebt es an der Innenseite des Führungsrohres fest, ohne die Reibstelle zwischen Spindel und Mutter zu erreichen. Erschwerend wirkt sich aus, dass die Stützwinde sowohl bei ausgefahrenem Stützbein (Mutter unten) als auch bei eingefahrenem Stützbein (Mutter oben) in die Fahrzeugwartung einbezogen wird und bei ausgefahrenem Stützbein der Abstand zwischen Schmiernippel und Mutter und mithin der Fliessweg für das Schmiermittel entsprechend grösser ist.

Der Erfindung liegt die Aufgabe zugrunde, eine Stützwinde der gattungsgemässen Art anzugeben, bei der eine wirksamere Schmierung des Spindeltriebs sichergestellt ist.

Erfindungsgemäss ist diese Aufgabe dadurch gelöst, dass eine flexible Schmierleitung den Schmiermittelanschluss im Inneren des Führungsrohres mit der Mutter des Spindeltriebs verbindet und das Schmiermittel an die Spindel innerhalb der Mutter leitet.

Bei dieser Lösung kann das Schmiermittel unter Druck unmittelbar an die Reibstelle zwischen Mutter und Spindel herangeführt werden, ohne mit dem Führungsrohr in Berührung zu kommen. Dies führt nicht nur zu einer wirksamen Schmierung, sondern ergibt auch einen geringen Schmiermittelverbrauch. Wenn der am Führungsrohr vorgesehene Schmiermittelanschluss mit einer zentralen Schmieranlage, wie sie an vielen Nutzfahrzeugen vorgesehen ist, verbunden wird, ist auch eine selbsttätige Schmierung möglich.

Vorzugsweise ist die Schmierleitung spiralförmig.

In der eingefahrenen Stellung des Stützbeins nimmt sie daher eine flache raumsparende Lage ein.

Sodann kann die Schmierleitung wendelförmig um die Spindel herumgeführt sein. Dies ergibt eine günstige Ausnutzung des Raumes zwischen Spindel und Führungsrohr.

Ferner kann die Schmierleitung mit einer die Seitenwand der Mutter des Spindeltriebs durchsetzenden Bohrung verbunden sein. Auf diese Weise wird das Schmiermittel unmittelbar zwischen Mutter und Spindel geleitet.

Vorzugsweise weist die Mutter des Spindeltriebs einen an die Spindel angrenzenden Ringraum auf. In diesen Ringraum kann überschüssiges Schmiermittel austreten und dort nachträglich wirksam werden.

Die Bohrung in der Mutter des Spindeltriebs kann unterhalb des nach oben offenen Ringraums an der Spindel enden. Bei einer Abwärtsbewegung der Mutter auf der Spindel wird überschüssiges Schmiermittel dann nach oben in den Ringraum mitgerissen, um sich dort zu sammeln.

Vorzugsweise ist ferner dafür gesorgt, dass die Mutter im Bereich des Ringraums einen grösseren Aussendurchmesser als im Bereich unterhalb des Ringraums aufweist und dass die Schmierleitung ein Durchführungsloch in der Umfangswand des Ringraums und die Bohrung die Wand der Mutter im Bereich unterhalb des Ringraums durchsetzt. Bei dieser Ausbildung kann die Schmierleitung leicht mittels eines zweiten Anschlusses an der Mutter angeschlossen werden, so dass die Oberseite der Mutter von einem Anschluss freigehalten und die Mutter weiterhin bis dicht an die Lagerplatte der Spindel hochgefahren werden kann.

Es ist aber auch möglich, die Ausbildung so zu wählen, dass die Bohrung die Mutter von der Stirnseite der Mutter her schräg zur Spindel durchsetzt.

Die Erfindung und ihre Weiterbildungen werden nachstehend anhand der Zeichnung bevorzugter Ausführungsbeispiele näher beschrieben. Es zeigen:

Fig. 1 einen Teil einer erfindungsgemässen Teleskop-Stützwinde bei ausgefahrenem Stützbein, teilweise im Schnitt,

Fig. 2 die Teleskop-Stützwinde nach Fig. 1 bei eingefahrenem Stützbein und weitere Teile im Axialschnitt,

Fig. 3 den Schnitt A-A der Fig. 2,

Fig. 4 den Schnitt B-B der Fig. 1 und

Fig. 5 einen Teil eines abgewandelten Ausführungsbeispiels einer erfindungsgemässen Teleskop-Stützwinde.

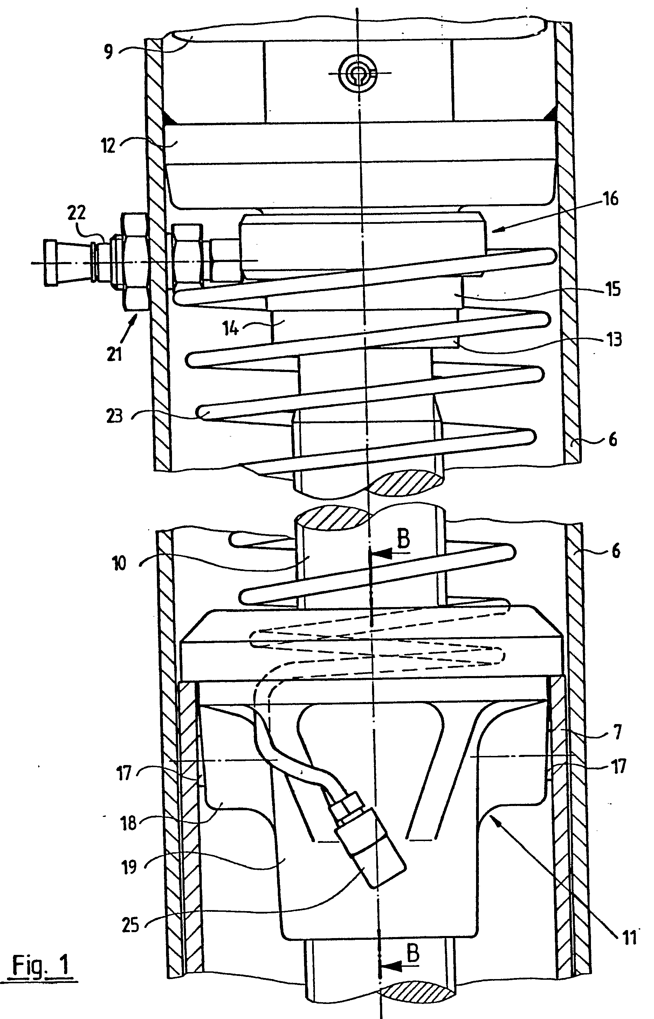

Die Teleskop-Stützwinde nach den Fig. 1 bis 4 hat ein äusseres vierkantiges Führungsrohr 6, in dem ein Stützbein 7 in Form eines vierkantigen Rohres axial verschiebbar gelagert ist. Das Stützbein 7 ist mittels einer nicht dargestellten Handkurbel über Kegelräder 8, 9 und einen Spindeltrieb, bestehend aus einer Spindel 10 und einer Mutter 11, antreibbar. Die Spindel 10 ist mit dem Kegelrad 9 drehfest verbunden und in einer Lagerplatte 12, die quer zum Führungsrohr 7 befestigt ist, drehbar gelagert und stützt sich mit einer Ringschulter 13 über Zwischenringe 14, 15 und ein Axiallager 16 an der Unterseite der Lagerplatte 12 ab.

Die Mutter 11 ist in der oberen Öffnung des rohrförmigen Stützbeins 7 mittels radialer Bolzen 17, die in radiale Bohrungen der Wand des Stützbeins 7 einerseits und der Mutter 11 andererseits eingreifen, drehfest befestigt. Die Mutter hat einen oberen Bereich 18, dessen Aussendurchmesser grösser als der eines unteren Bereiches 19 der Mutter ist. Im oberen Bereich 18 ist die Mutter mit einem nach oben und zur Spindel 10 hin offenen Ringraum 20 versehen.

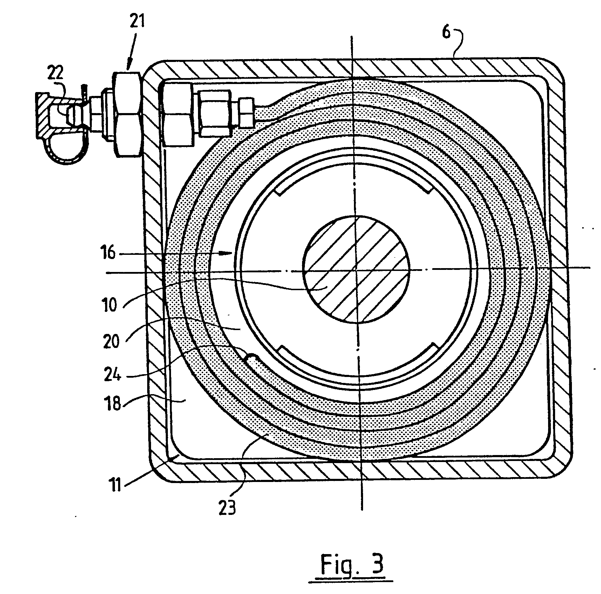

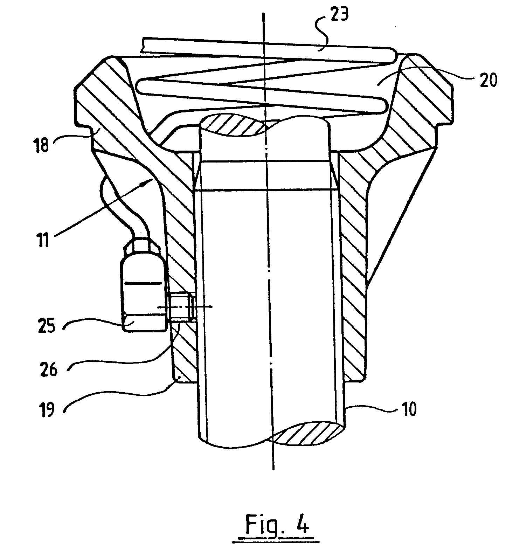

Unmittelbar unterhalb der Lagerplatte 12 durchsetzt ein Schmiermittelanschluss 21 mit einem Schmiernippel 22 eine Wand des Führungsrohres 6 in der Nähe einer Ecke des Führungsrohres 6. Am inneren Ende des Schmiermittelanschlusses 21 ist eine flexible Schmierleitung 23 aus Kunststoff mit ihrem einen Ende angeschlossen. Ferner ist die Schmierleitung 23 in der Draufsicht nach Fig. 3 spiralförmig und in der ausgefahrenen Stellung des Stützbeins 7 nach Fig. 1 wendelförmig um die Spindel 10 herumgeführt. Dabei durchsetzt sie eine etwa axiale Bohrung 24 in der Wand des oberen Bereiches 18 der Mutter 11 und ist mit ihrem anderen Ende an einem weiteren Anschluss 25 befestigt, der nach Fig. 4 in eine radial durchgehende Bohrung 26 im unteren Bereich 19 der Mutter 11 eingeschraubt ist.

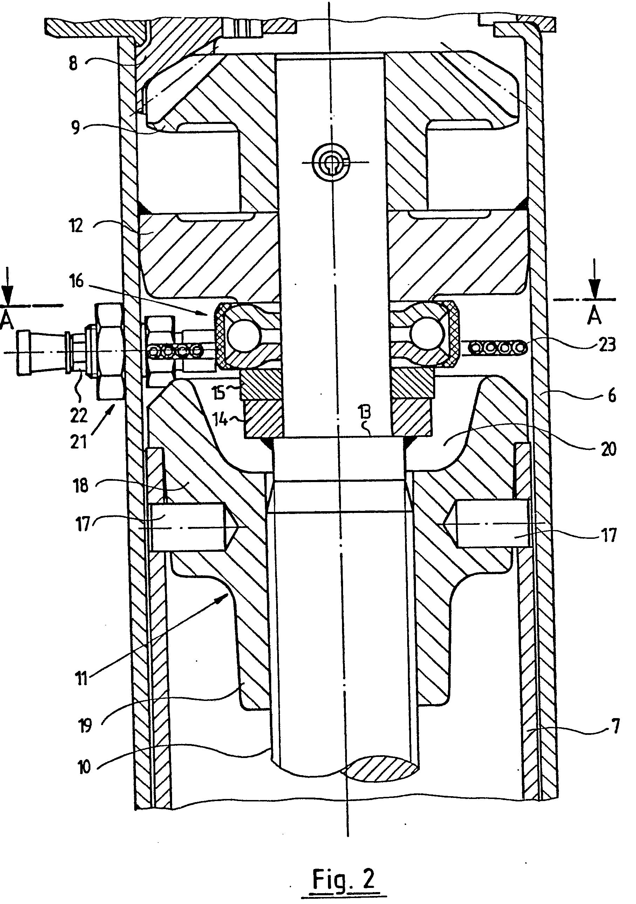

Das Schmiermittel kann daher, sei es in der ausgefahrenen Lage des Stützbeins 7 nach Fig. 1 oder in der eingefahrenen Lage des Stützbeins nach Fig. 2, über den Schmieranschluss 21, die Schmiermittelleitung 23, den Anschluss 25 und die Bohrung 26 unmittelbar bis an die Spindel 10 innerhalb des Gewindeabschnitts 19 der Mutter 11 geleitet werden. Auf diese Weise ist eine sichere Schmierung, ohne übermässige Schmiermittelmengen zu verbrauchen, zwischen Spindel 10 und Mutter 11 gewährleistet. Überschüssiges Schmiermittel kann nach oben in den Ringraum 20 austreten und den Gewindeabschnitt der Spindel 10 beim Ausfahren des Stützbeins 7 fetten. Aufgrund der spiralförmig gewendelten Form der Schmierleitung 23 legt sich diese in der eingefahrenen Lage des Schützbeins 7 raumsparend in eine Ebene, wie es in Fig. 2 dargestellt ist.

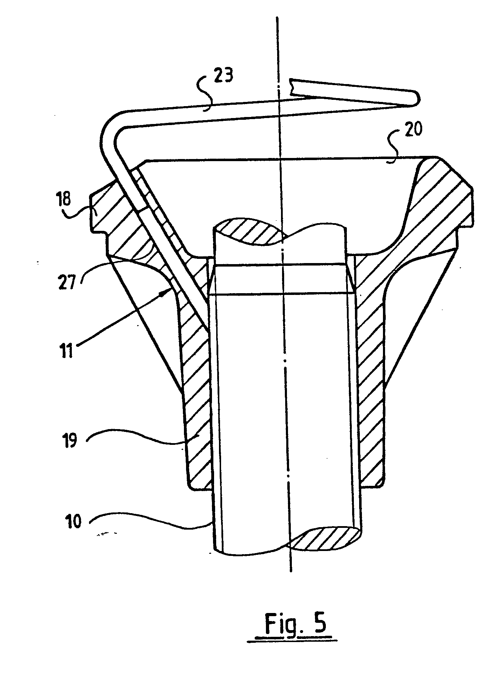

Statt der Bohrungen 24 und 26 kann nach Fig. 5 auch eine durch die Wand des oberen Bereiches 18 der Mutter 11 von der Stirnseite der Mutter 11 her schräg nach unten bis an das Innengewinde der Mutter durchgeführte Bohrung 27 vorgesehen sein, in der das untere Ende der Schmierleitung 23 reibschlüssig befestigt ist.

## Patentansprüche

1. Teleskop-Stützwinde mit einem mittels Spindeltrieb (10, 11) aus einem Führungsrohr (6) ausfahrbaren Stützbein, wobei der Spindeltrieb eine am Stützbein befestigte Mutter (11) und eine im Führungsrohr drehbar gelagerte, antreibbare Spindel (10) aufweist, die in die Mutter eingreift, und mit einem Schmiermittelanschluss (21) am Führungsrohr, über den Schmiermittel zur Schmierung des Spindeltriebs zuführbar ist, dadurch gekennzeichnet, dass eine flexible Schmierleitung (23) den Schmiermittelanschluss (21) im Inneren des Führungsrohres (6) mit der Mutter (11) des Spindeltriebs (10, 11) verbindet und das Schmiermittel an die Spindel (10) innerhalb der Mutter (11) leitet.

2. Stützwinde nach Anspruch 1, dadurch gekennzeichnet, dass die Schmierleitung (23) spiralförmig ist.

3. Stützwinde nach Anspruch 1 oder 2, dadurch gekennzeichnet, dass die Schmierleitung (23) wendelförmig um die Spindel (10) herumgeführt ist.

4. Stützwinde nach einem der Ansprüche 1 bis 3, dadurch gekennzeichnet, dass die Schmierleitung (23) mit einer die Seitenwand der Mutter (11) des Spindeltriebs (10, 11) durchsetzenden Bohrung (26; 27) verbunden ist.

5. Stützwinde nach einem der Ansprüche 1 bis 4, dadurch gekennzeichnet, dass die Mutter (11) des Spindeltriebs (10, 11) einen an die Spindel (10) angrenzenden Ringraum (20) aufweist.

6. Stützwinde nach Anspruch 5, dadurch gekennzeichnet, dass die Bohrung (26; 27) unterhalb des nach oben offenen Ringraums (20) an der Spindel (10) endet.

7. Stützwinde nach Anspruch 6, dadurch gekennzeichnet, dass die Mutter (11) im Bereich (18) des Ringraums (20) einen grösseren Aussendurchmesser als im Bereich (19) unterhalb des Ringraums (20) aufweist und dass die Schmierleitung (23) ein Durchführungsloch (24) in der Umfangswand des Ringraums (20) und die Bohrung (26) die Wand der Mutter (11) im Bereich (19) unterhalb des Ringraums (20) durchsetzt.

## Claims

1. Telescopic support jack with a support leg which is extendible out of a guide tube (6) by means of a spindle drive (10, 11), wherein the spindle drive displays a nut (11) fastened at the support leg and a drivable spindle (10), which is rotatably borne in the guide tube and engages into the nut, and with a lubricant connection (21), by way of which lubricant is feedable for the lubrication of the spindle drive, at the guide tube, characterised thereby, that a flexible lubricant duct (23) connects the lubricant connection (21) in the interior of the guide tube (6) with the nut (11) of the spindle drive (10, 11) and conducts the lubricant to the spindle (10) within the nut (11).

2. Support jack according to claim 1, characterised thereby, that the lubricant duct (23) is of spiral shape.

3. Support jack according to claim 1 or 2, characterised thereby, that the lubricant duct (23) is guided in helical shape around the spindle (10).

4. Support jack according to one of the claims 1 to 3, characterised thereby, that the lubricant duct (23) is connected with a bore (26; 27) passing through the side wall of the nut (11) of the spindle drive (10, 11).

5. Support jack according to one of the claims 1 to 4, characterised thereby, that the nut (11) of the spindle drive (10, 11) displays an annular space (20) adjoining the spindle (10).

6. Support jack according to claim 5, characterised thereby, that the bore (26; 27) ends at the spindle (10) underneath the upwardly open annular space (20).

7. Support jack according to claim 6, characterised thereby, that the nut (11) displays a greater external diameter in the region (18) of the annular space (20) than in the region (19) underneath the annular space (20) and that the lubricant duct (23) passes through a feedthrough hole (24) in the circumferential wall of the annular space (2) and the bore (26) passes through the wall of the nut (11) in the region (19) underneath the annular space (2).

**Revendications**

1. Vérin support télescopique comportant une béquille pouvant sortir d'un tube de guidage (6) au moyen d'une commande à broche (10, 11), cette dernière comportant un écrou (11) fixé à la béquille, ainsi qu'une broche (10) pouvant être entraînée, montée de façon à pouvoir tourner dans le tube de guidage et venant s'engager dans l'écrou, ainsi qu'un raccord (21) pour lubrifiant prévu sur le tube de guidage et par lequel le lubrifiant peut être acheminé en vue de lubrifier la commande à broche, caractérisé en ce qu'une conduite flexible (23) relie le raccord à lubrifiant (21) à l'intérieur du tube de guidage (6) à l'écrou (11) de la commande à broche (10, 11) et achemine le lubrifiant à la broche (10) à l'intérieur de l'écrou (11).

2. Vérin support selon la revendication 1, caractérisé en ce que la conduite à lubrifiant (23) est en spirale.

3. Vérin support selon la revendication 1 ou 2, caractérisé en ce que la conduite à lubrifiant (23) est enroulée sous forme d'une hélice autour de la broche (10).

4. Vérin support selon une des revendications 1 à 3, caractérisé en ce que la conduite à lubrifiant (23) est reliée à un passage (26; 27) traversant la paroi latérale de l'écrou (11) de la commande à broche (10, 11).

5. Vérin support selon une des revendications 1 à 4, caractérisé en ce que l'écrou (11) de la commande à broche (10, 11) comporte un espace annulaire (20) adjacent à la broche (10).

6. Vérin support selon la revendication 5, caractérisé en ce que le passage (26; 27) se termine en dessous de l'espace annulaire (20) ouvert vers le haut sur la broche (10).

7. Vérin support selon la revendication 6, caractérisé en ce que, dans la zone (18) de l'espace annulaire (20), l'écrou (11) a un plus grand diamètre extérieur que dans la zone (19) située en dessous de cet espace annulaire (20) tandis que la conduite à lubrifiant (23) traverse un trou de passage (24) dans la paroi périphérique de l'espace annulaire (20), le passage (26) traversant la paroi de l'écrou (11) dans la zone (19) située en dessous de l'espace annulaire (20).

Fig. 1

Fig. 2

Fig. 3

Fig. 4

**Fig. 5**